(11) **EP 3 131 189 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(21) Anmeldenummer: **15180674.2**

(22) Anmeldetag: **12.08.2015**

(51) Int Cl.:
*H02K 21/40* (2006.01)  *H02K 1/02* (2006.01)
*H02K 1/20* (2006.01)  *H02K 1/24* (2006.01)
*H02K 1/32* (2006.01)  *H02K 9/06* (2006.01)
*H02K 9/19* (2006.01)  *H02K 15/02* (2006.01)
*H02K 16/04* (2006.01)

(54) **ROTOR EINER ELEKTRISCHEN MASCHINE**

ROTOR OF AN ELECTRIC MACHINE

ROTOR D'UNE MACHINE ELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2017 Patentblatt 2017/07**

(73) Patentinhaber: **Siemens Aktiengesellschaft**
**80333 München (DE)**

(72) Erfinder:
• **Volkmuth, Benjamin**
**97717 Sulzthal (DE)**

• **Vollmer, Rolf**
**36129 Gersfeld (DE)**

(56) Entgegenhaltungen:
**EP-A1- 1 940 005    EP-A1- 2 498 376**
**EP-A1- 2 693 612    EP-A1- 2 770 616**
**WO-A1-2015/034514    DE-A1-102011 012 454**
**DE-B- 1 270 673    GB-A- 521 617**
**US-A1- 2013 278 094**

EP 3 131 189 B1

**Beschreibung**

Die Erfindung betrifft einen Rotor einer elektrischen Maschine, die elektrische Maschine und ein Verfahren zur Fertigung des Rotors.

Die elektrische Maschine ist beispielsweise eine Synchronmaschinen oder eine Asynchronmaschine. Die Synchronmaschine ist beispielsweise als eine Drehstromsynchronmaschinen ausgebildet, insbesondere als permanenterregte Drehstromsynchronmaschinen. Derartige Drehstromsynchronmaschinen können beispielsweise als Motor oder auch als Generator betrieben werden.

Aus der EP 2 770 616 A1 ist eine elektrische Maschine bekannt, welche ein erstes Statorelement, ein zweites Statorelement und einen mit einer Rotorwelle verbundenen Rotor aufweist. Die Rotorwelle ist in Lagern drehbar gelagert, so dass der Rotor um eine Rotationsachse rotierbar ist. Der Rotor ist radial zur Rotationsachse gesehen zwischen dem ersten und dem zweiten Statorelement angeordnet. Das erste Statorelement trägt ein Statorwicklungssystem. Das zweite Statorelement trägt eine Anzahl von Permanentmagneten. Die Permanentmagneten generieren Magnetfelder, die um die Rotationsachse herum gesehen alternierend auf den Rotor zu und von dem Rotor weg gerichtet sind. Der Rotor weist eine Anzahl an weichmagnetischen Segmenten auf, die tangential um die Rotationsachse herum gesehen gleichmäßig verteilt sind und zwischen denen sich jeweils unmagnetische und elektrisch schlecht oder nicht leitende Bereiche befinden.

Aus der DE 12 70 673 ist eine weitere elektrische Maschine bekannt. Die Läuferwelle läuft in Lagerschalen, die in einer feststehenden, vorteilhaft aus ferromagnetischem Werkstoff bestehenden Lagerbuchse angeordnet sind. Auf der Lagerbuchse ist das Blechpaket des Innenständers befestigt, welcher in Nuten die niederpolige Wicklung trägt. Auf dem Ende der Lagerbuchse ist das topf- oder glockenartig ausgebildete Motorgehäuse befestigt, in dessen hohlzylindrischen, aus ferromagnetischem Material hergestellten Mantelteil das Blechpaket des Außenständers eingesetzt ist. In den Nuten des Außenständers ist die höherpolige Wicklung eingebracht. Zwischen beiden Ständern rotiert das Blechpaket des topf- oder glockenartigen Läufers, an dessen innerer Mantelfläche die Nuten und an dessen äußerer Mantelfläche die Nuten verteilt sind. Beide Nutensysteme sind mit einer vorwiegend vergossenen, in sich kurzgeschlossenen Käfigwicklung versehen.

Auch die GB 521 617 zeigt eine elektrische Maschine mit einem glockenförmigen Rotor.

Aus der US 2013/0278094 A1 ist eine elektrische Maschine bekannt, welche einen Außenläufer aufweist. Dabei ist eine Regelungseinrichtung für die elektrische Maschine zumindest teilweise innerhalb des Stators platziert.

Eine Aufgabe der Erfindung ist es einen Rotor mit einer glockenförmigen Form anzugeben, welcher eine hohe Effizienz einer elektrischen Maschine mit diesem Rotor bei möglichst einfacher Fertigung ermöglicht.

Eine Lösung der Aufgabe wird bei einem Rotor mit den Merkmalen nach Anspruch 1 und bei einer elektrischen Maschine mit den Merkmalen nach Anspruch 5 erreicht. Eine weitere Lösung ergibt sich bei einem Verfahren zur Herstellung eines Rotors nach Anspruch 14. Vorteilhafte Weiterbildungen sind Gegenstand der abhängigen Ansprüche 2 bis 4, 6 bis 13 und 15.

Ein Rotor einer elektrischen Maschine ist derart ausbildbar, dass dieser eine glockenförmige Form aufweist. Derartige Rotoren können auch als Glockenläufer bezeichnet werden. Der Rotor weist einen zylinderförmigen Abschnitt auf und einen konusförmigen Abschnitt, wobei der zylinderförmige Abschnitt magnetisch aktive Bereiche und amagnetische Bereiche aufweist. Durch die Unterteilung in amagnetische Bereiche und magnetisch aktive Bereiche, kann der Rotor bezüglich seiner Wirkungsweise in der elektrischen Maschine optimiert werden. Magnetisch aktive Bereiche sind z.B. Permanentmagnete aber auch Bereiche mit weichmagnetischen Materialien wie ferromagnetische Materialien, die sich in einem Magnetfeld leicht magnetisieren lassen.

Der Rotor kann beispielsweise als Glockenläufer in einer Doppelstatormaschinen eingesetzt werden. Insbesondere dann, wenn der Rotor komplexe Strukturen aufweist, dann zur Fertigung des Rotors ein additives Fertigungsverfahren verwendet werden. So kann zum Aufbau eines glockenförmigen Rotors ein Fertigungsverfahren verwendet werden, bei welchem aus kleinen Einzelpartikeln mit Hilfe einer AM-Technologie (AM: additive manufacturing), ein dreidimensionaler Körper hergestellt wird. Dabei können mindestens zwei unterschiedliche Materialien verwendet werden. Ein erstes Material ist dabei ferromagnetisch und ein zweites Material ist amagnetisch, wobei das amagnetische Material beispielsweise einen Wert $\mu r < 2$ aufweist.

Durch ein additives Fertigungsverfahren (AM-Technologie) ist es möglich eine mit herkömmlichen Fertigungsmitteln (z.B. Fräsen und Drehen) aufwendige Fertigung des Rotors einfacher zu gestalten.

In einer Ausgestaltung des Rotors weist dieser radial Löcher auf. Dadurch lässt sich beispielsweise das Gewicht des Rotors wie auch dessen Trägheit reduzieren. Die Löcher können auch zur Luftkühlung verwendet werden. Insbesondere können die Löcher als Luftschaufeln ausgebildet werden, welche zur Belüftung des Rotors bzw. der elektrischen Maschine beitragen. Eine effiziente Luftkühlung der elektrischen Maschine dient der Steigerung der Effizienz.

In einer Ausgestaltung des Rotors weist dieser Luftschaufeln auf. Die Luftschaufeln werden insbesondere durch einen amagnetischen Bereich des Rotors ausgebildet, so dass die Luftschaufeln in den amagnetischen Bereichen des Rotors integriert sind. Die Luftschaufeln erzeugen einen Luftstrom innerhalb der elektrischen Maschine und tragen so zu einer reduzierten Erwärmung bei. Dies führt zu geringeren Belastungen der Bauteile (HRE-reduzierte oder - freie Magnete, bzw. höherremanente Magnete) und/oder erhöht die Leistung der elektrischen Maschine. Die Luftschaufeln können in amagnetischen Stegen des Rotors integriert sein oder in einem Rotorbereich vor oder hinter dem Aktivteil. Der Aktivteil des Rotors ist der Teil, welcher die magnetisch aktiven Teile aufweist.

In einer Ausgestaltung des Rotors weist dieser einen konusförmigen Abschnitt auf. Mittels der Konusform kann der zylinderförmige Abschnitt zu einer Welle hin verbunden werden. Um das Gewicht des konusförmigen Abschnitts zu reduzieren und/oder dessen Stabilität zu erhöhen weist dieser eine Stegstruktur auf. Zwischen den Stegen kann die Konusform durchbrochen sein, also Löcher aufweisen.

In einer Ausgestaltung des Rotors weist der magnetisch aktive Bereich des Rotors eine Blechung auf. Die Blechung befindet sich insbesondere im magnetischen Aktivteil. Die Blechung wird beispielsweise durch eine alternierende Verfestigung eines flüssigen oder pulverförmigen Ausgangsmaterials mittels eines AM-Prozesses erreicht. Durch die "Blechung" können die Eisenverluste im Rotor verringert werden.

In die Rotorstruktur können außer der gezielten magnetischen Struktur auch Strukturen zur Reduzierung von Wirbelströmen integriert sein.

In einer Ausgestaltung des Rotors weist dieser ein additiv erzeugtes dreidimensionales Element auf. Dieses Element ist z.B. zumindest ein Teil des zylinderförmigen Abschnitts und/oder ein Teil des konusförmigen Abschnitts des Rotors. Durch einen Aufbau des Rotors durch eine additive Fertigungsmethode kann eine reduzierte Trägheit des Rotors erreicht werden. Eine Topologie des Rotors kann so optimiert werden, dass der Rotor dort, wo mechanische Kräfte auftreten, Stege und/oder Verstärkungen gezielt ausgebildet werden. Die AM-Technologie erlaubt es ein Bauteil so aufzubauen, dass Material insbesondere nur an den belasteten Bereichen aufgebaut wird. So ist es möglich im Bereich eines Wellenendes Wurzelartige Bereiche auszuführen. Diese wurzelartigen Bereiche bilden Stegstrukturen aus, welche insbesondere im Bereich des konusförmigen Abschnitts für eine gute Kraftübertragung sorgen können. Die amagnetischen Bereiche im Aktivteil können hohl ausgeführt werden oder auch mit einer Fachwerkstruktur versehen werden um die Stabilität zu erhöhen. Des Weiteren ist es auch möglich axiale Lücken in Bereichen zu gestalten, in denen kein Material benötigt wird.

Eine permanenterregte Drehstromsynchronmaschine ist derart ausbildbar, dass diese einen glockenförmigen Rotor der beschriebenen Art aufweist. Permanentmagnete weisen bezüglich ihres Einsatzes einen begrenzten Temperaturbereich auf. Magnete mit Seltenen Erden sind oft auch bei höheren Temperaturen verwendbar, allerdings vergleichsweise teuer. Eine elektrische Maschine, bei welcher die verwendeten Permanentmagnete nicht unzulässig erwärmt werden kann somit ein Konstruktionsziel sein.

Eine elektrische Maschine ist derart ausbildbar, dass diese einen Außenstator, einen Innenstator, der konzentrisch zu dem Außenstator innerhalb des Außenstators angeordnet ist, und einen Rotor, der konzentrisch zu dem Außenstator und dem Innenstator zwischen dem Außenstator und dem Innenstator angeordnet ist und der relativ zum Außenstator und zum Innenstator bewegbar ist, aufweist. Dabei weist der Außenstator eine Mehrzahl von Wicklungen auf. Der Innenstator weist eine Mehrzahl von Permanentmagneten auf. Der Rotor weist insbesondere ein Trägerelement auf, das ganz oder teilweise aus einem amagnetischen Material gebildet ist und das eine Mehrzahl von Aussparungen aufweist, in denen jeweils ein weichmagnetisches Segment angeordnet ist.

Die elektrische Maschine ist insbesondere als Drehstromsynchronmaschine ausgebildet und kann als Motor oder als Generator verwendet werden. Die elektrische Maschine umfasst einen Außenstator, der mehrere Wicklungen aufweist. Zu diesem Zweck kann der Außenstator entsprechende Nuten aufweisen, in denen die Wicklungen angeordnet sind. Innerhalb des Außenstators ist der Rotor angeordnet, der beispielsweise mit einer Welle drehfest verbunden sein kann. Der Rotor umfasst wiederum ein Trägerelement, das aus einem amagnetischen Material gebildet ist. Ein amagnetisches Material ist üblicherweise durch ein magnetisches Feld nicht beeinflussbar. In das Trägerelement sind eine Mehrzahl von weichmagnetischen Segmenten eingebettet. Schließlich umfasst die elektrische Maschine einen Innenstator, der eine Mehrzahl von Permanentmagneten aufweist. Somit kann eine permanenterregte Drehstromsynchronmaschine bereitgestellt werden, bei der die Permanentmagneten an dem Innenstator angeordnet sind und somit im Betrieb der elektrischen Maschine nicht bewegt werden. Somit kann Wärme, die im Betrieb der elektrischen Maschine entsteht, einfacher von dem Permanentmagneten abgeführt werden als bei elektrischen Maschinen, bei denen die Permanentmagneten in dem Rotor vorgesehen sind.

In einer bevorzugten Ausführungsform weist die elektrische Maschine eine erste Kühleinrichtung zum Kühlen des Innenstators auf. Somit kann die im Betrieb der elektrischen Maschine entstehende Wärme zuverlässig von den Permanentmagneten des Innenstators abgeführt werden. Auf diese Weise kann verhindert werden, dass die Permanentmagneten entmagnetisiert werden. Somit können Magnete mit einer geringeren Koerzitivfeldstärke eingesetzt werden. Dies bedeutet wiederum, dass Permanentmagneten mit einem geringeren Anteil an Seltenen Erden verwendet werden können. Auf diese Weise kann die Remanenz erhöht und die Kosten reduziert werden.

Bevorzugt weist die elektrische Maschine eine zweite Kühleinrichtung zum Kühlen des Außenstators auf. Durch die zweite Kühleinrichtung kann verhindert werden, dass die Wicklungen des Außenstators im Betrieb der elektrischen Maschine überhitzt und somit gegebenenfalls beschädigt werden. Auf diese Weise kann ein zuverlässiger Betrieb der elektrischen Maschine ermöglicht werden.

Weiterhin ist es vorteilhaft, wenn die erste Kühleinrichtung und/oder die zweite Kühleinrichtung eine Mehrzahl von Kühlrohren aufweisen, die von einer Kühlflüssigkeit durchströmt sind. Als Kühlflüssigkeit kann beispielsweise Wasser oder ein Wasser-Glykol-Gemisch verwendet werden. Entsprechende Kühlrohre können einfach und kostengünstig gefertigt werden. In einer Ausgestaltung sind die Kühlrohre in einem Eisenpaket des Innenstators und/oder des Außenstators angeordnet. Beispielsweise können die Kühlrohre der ersten Kühleinrichtung und/oder der zweiten Kühleinrichtung durch entsprechende Bohrungen, die in das jeweilige Eisenpaket eingebracht sind, bereitgestellt werden. Derartige Kühlrohre sind einfach und kostengünstig zu fertigen.

Weiterhin hat es sich vorteilhaft gezeigt, wenn die Kühlrohre entlang der axialen Richtung der elektrischen Maschine in Umfangsrichtung gleichmäßig verteilt angeordnet sind. Durch eine derartige Anordnung der Kühlrohre kann die im Betrieb der elektrischen Maschine entstehende Wärme sowohl im Innenstator als auch im Außenstator gleichmäßig abgeführt werden.

In einer Ausgestaltung sind die Permanentmagnete des Innenstators aus einem Ferrit gebildet. Die Verwendung eines Ferrits weist den Vorteil auf, dass somit kostengünstige Permanentmagneten für den Innenstator bereitgestellt werden können.

In einer alternativen Ausführungsform enthalten die Permanentmagnete des Innenstators Eisen-Neodym-Bor. Derartige Permanentmagneten des Innenstators, die Eisen, Neodym und/ oder Bor aufweisen, zeichnen sich durch eine hohe Temperaturbeständigkeit aus.

In einer weiteren Ausführungsform ist der Rotor mit einer Welle verbunden, die als Hohlwelle ausgebildet ist. Insbesondere für den Fall, dass die elektrische Maschine für eine Werkzeugmaschine verwendet wird, kann durch die Verwendung einer Hohlwelle eine flexible Ausgestaltung der Werkzeugmaschine ermöglicht werden.

Bei einem Verfahren zur Herstellung eines Rotors einer elektrischen Maschine wird ein additives Herstellungsverfahren verwendet. Der Rotor weist eine glockenförmige Form auf, wobei zur Herstellung des Rotors zumindest teilweise ein additives Herstellungsverfahren verwendet wird. Durch das additive Herstellungsverfahren können auf einfache Weise komplexe geometrische Strukturen hergestellt werden.

Beispiele für additive Herstellungsverfahren sind Pulverbettverfahren, Freiraumverfahren und Flüssigmaterialverfahren. Zu den Pulverbettverfahren zählen selektives Laserschmelzen (SLM), selektives Lasersintern (SLS), Selective Head Sintering (SHS), Binderjetting (3D-Druck von Pulvermaterial mit Binder), Elektronenstrahlschmelzen (Electron Beam Melting = EBM) etc. Zu den Freiraumverfahren können folgende Verfahren gezählt werden: Fused Deposition Modeling (FDM oder auch Fused Filament Fabrication (FFF)), Laminated Object Modelling (LOM), Auftragsschweißen bzw. Cladding, Wax Deposition Modeling (WDM), Contour Crafting, Kaltgasspritzen und Elektronenstrahlschmelzen (Electron Beam Welding = EBW). Beispiele für Flüssigmaterialverfahren sind Stereolithografie (SLA) + Mikro-SLA, Digital Light Processing (DLP) und Liquid Composite Moulding (LCM).

Bei einer Ausgestaltung des Verfahrens zur Herstellung des Rotors wird ein Rotor der beschriebenen Art hergestellt. Dabei werden beispielsweise der zylinderförmige Abschnitt und/oder der konusförmige Abschnitt mittels der AM-Technologie ganz oder teilweise hergestellt.

In einer Ausgestaltung des Verfahrens wird eine Blechung, welche insbesondere der Reduzierung von Wirbelströmen dient, durch eine alternierende Verfestigung unterschiedlicher Materialien erzeugt. Die Blechung verringert die Eisenverluste im Rotor.

Nachfolgend wird die Erfindung anhand der beigefügten Zeichnungen beispielhaft näher erläutert. Dabei zeigen:

FIG 1    einen Rotor;
FIG 2    eine erfindungsgemäße elektrische Maschine gemäß einer ersten Ausführungsform in einem Querschnitt;
FIG 3    eine elektrische Maschine in einem Längsschnitt;
FIG 4    eine erfindungsgemäße elektrische Maschine gemäß einer weiteren Ausführungsform im Querschnitt;
FIG 5    eine elektrische Maschine in einem Längsschnitt; und
FIG 6    ein Diagramm in dem die Magnetqualitätsänderung der Permanentmagnete eines Innenstators der elektrischen Maschine in Abhängigkeit von der Temperatur dargestellt ist.

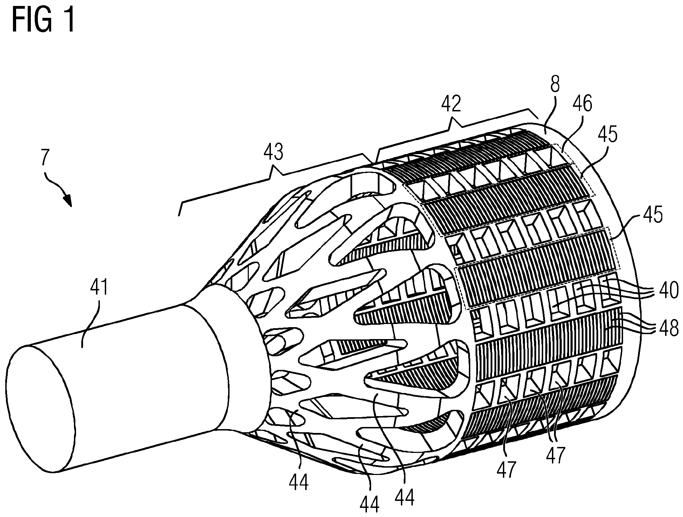

FIG 1 zeigt einen Rotor 7 einer elektrischen Maschine. Der Rotor hat das Design eines Glockenläufers insbesondere für eine Doppelstatormaschine. Der Rotor kann unter Verwendung von additiven Fertigungsverfahren hergestellt werden. Der Rotor 7 weist einen zylinderförmigen Abschnitt 42 und einen konusförmigen Abschnitt 43 auf. Der konusförmige Abschnitt, welcher eine wurzelartige Struktur zum Aktivteil (dem zylinderförmigen Abschnitt 42) bzw. Stegstruktur 44 aufweist, schließt an eine Welle 41 und an den zylinderförmigen Abschnitt 42 an, wobei der zylinderförmige Abschnitt 42 magnetisch aktive Bereiche 45 und amagnetische Bereiche 46 aufweist.

Alternativ ist es auch möglich die hier hohl ausgeführten Bereiche (zwischen den magnetischen Bereichen des Aktivteils und den Übergang von Wellenende zu Aktivteil) massiv oder in fachwerkbauweise auszuführen, was in der Figur jedoch nicht dargestellt ist.

Der Rotor 7 weist axiale Lücken 40 zwischen magnetisch aktiven Bereichen 45 auf. Der magnetisch aktive Bereich 45 ist geblecht 48 ausgeführt.

Die Lücken 40 sind axial ausgerichtet, wobei die einzelnen Lücken jeweils durch radiale Löcher 40 ausgebildet sind.

Weisen die Löcher zumindest teilweise eine Schrägung einer der Lochwandungen auf, welche eine Normale in Drehrichtung aufweisen, so kann sich so eine Luftschaufel 47 ausbilden, welche der Kühlung der elektrischen Maschine dient.

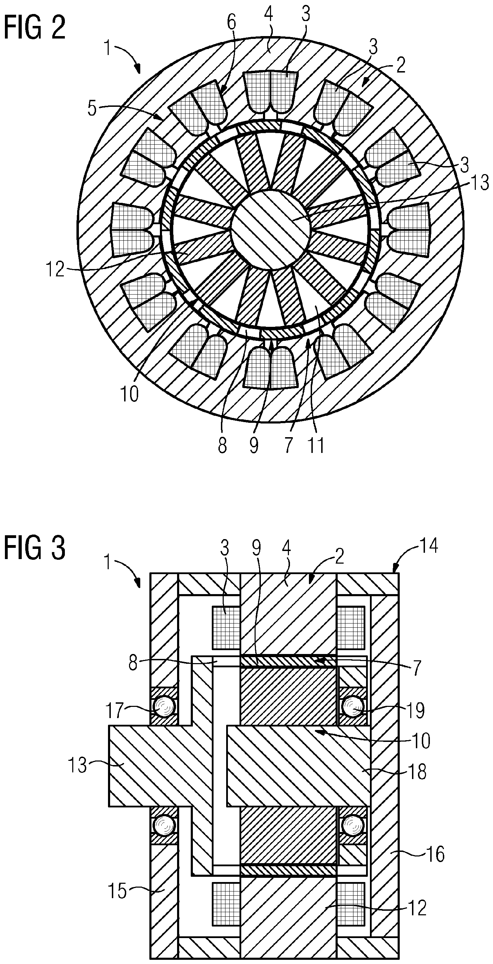

FIG 2 zeigt eine Darstellung einer ersten Ausführungsform einer elektrischen Maschine 1 im Querschnitt. Die elektrische Maschine 1 umfasst einen Außenstator 2. Der Außenstator 2 weist ein Eisenpaket 4 auf, das eine Mehrzahl von Zähnen 5 mit dazwischenliegenden Nuten 6 aufweist. In die Nuten 6 sind entsprechende Wicklungen 3 eingebracht. Die Wicklungen 3 sind üblicherweise mit einem hier nicht dargestellten Drehstromnetz elektrisch verbunden. Innerhalb des Außenstators 2 ist ein Rotor 7 angeordnet. Der Rotor 7 ist dabei konzentrisch zu dem Außenstator 2 angeordnet. Der Rotor 7 weist ein Trägerelement 8 auf, das aus einem amagnetischen Material gebildet ist. Das Trägerelement 8 weist mehrere Aussparungen auf, in die jeweils weichmagnetische Segmente 9 eingebettet sind. Des Weiteren weist die elektrische Maschine 1 einen Innenstator 10 auf. Der Innenstator 10 ist konzentrisch innerhalb des Rotors 7 angeordnet. Der Innenstator 10 umfasst ein Eisenpaket 11, das eine Mehrzahl von Aussparungen aufweist, in denen jeweils ein Permanentmagnet 12 angeordnet ist. Die Permanentmagneten 12 können beispielsweise Neodym-Eisen-Bor enthalten.

In dem vorliegenden Ausführungsbeispiel weist der Außenstator 2 bzw. dessen Wicklungen 3 die Polpaarzahl pw = 4 auf. Der Innenstator 10 bzw. dessen Permanentmagneten 12 weisen die Polpaarzahl pm = 6 auf. Der Rotor 7 weist vorliegend zehn weichmagnetische Segmente 9 auf. Somit ist die Polpaarzahl des Rotors pr = 10. Dabei entspricht die nach außen wirksame Polpaarzahl der Polpaarzahl des Rotors. Allgemein können die Polpaarzahlen der elektrischen Maschine 1 nach folgender Formel kombiniert werden:

$$pr = |pm +/- pw|$$

FIG 3 zeigt die elektrische Maschine 1 gemäß FIG 2 in einem Längsschnitt. Hierbei ist zu erkennen, dass der Rotor 7 topfförmig ausgebildet ist. Der topfförmige Rotor 7 ist mit einer Welle 13 drehfest verbunden. Darüber hinaus ist in FIG 3 ein Gehäuse 14 der elektrischen Maschine zu erkennen. Das Gehäuse 14 weist auf der Antriebsseite einen ersten Flansch 15 auf. Auf der Nichtantriebsseite weist das Gehäuse 14 einen zweiten Flansch 16 auf. Zwischen dem ersten Flansch 15 und der Welle 13 ist ein erstes Lager 17 angeordnet, das beispielsweise als Kugellager ausgebildet ist. Darüber hinaus weist die elektrische Maschine 1 ein Stützelement 18 auf, an welchem der Innenstator 10 gehalten ist. Zwischen dem Stützelement 18 und dem Rotor 7 ist ein zweites Lagerelement 19 angeordnet, das ebenfalls als Kugellager ausgebildet sein kann.

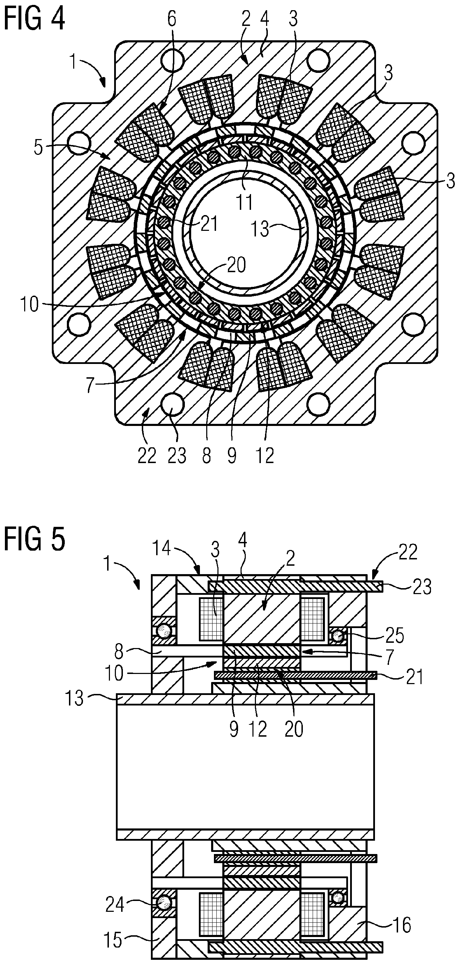

FIG 4 zeigt eine weitere Ausführungsform einer elektrischen Maschine 1 in einem Querschnitt. Die in FIG 4 dargestellte elektrische Maschine 1 unterscheidet sich von der gemäß FIG 2 dadurch, dass die elektrische Maschine 1 eine erste Kühleinrichtung 20 zum Kühlen des Innenstators 10 aufweist. Die erste Kühleinrichtung 20 umfasst eine Mehrzahl von Kühlrohren 21, die innerhalb des Eisenpakets 11 des Innenstators 12 angeordnet sind. Die Kühlrohre 21 sind in Umfangsrichtung des Innenstators 12 gleichmäßig verteilt angeordnet. Die Kühlrohre 21 erstrecken sich entlang der axialen Richtung der elektrischen Maschine 1. Mit der ersten Kühleinrichtung 20 können die Permanentmagnete 12 gekühlt werden. Bei der elektrischen Maschine 1 gemäß FIG 4 können die Permanentmagneten 12 beispielsweise aus einem Ferrit gefertigt sein.

Des Weiteren umfasst die elektrische Maschine 1 eine zweite Kühleinrichtung 22. Auch die zweite Kühleinrichtung 22 umfasst eine Mehrzahl von Kühlrohren 23, die sich entlang der axialen Richtung der elektrischen Maschine erstrecken. Auch die Kühlrohre 23 der zweiten Kühleinrichtung 22 entlang der Umfangsrichtung des Außenstators 2 sind gleichmäßig verteilt angeordnet. Die Kühlrohre 21, 23 können mit einem Kühlmedium, insbesondere einer Kühlflüssigkeit durchströmt sein. Mit der zweiten Kühleinrichtung können die Wicklungen 3 des Außenstators 2 gekühlt werden. Durch die erste Kühleinrichtung 20 kann die Wärme, die im Betrieb der elektrischen Maschine 1 entsteht, von dem Innenstator 10 abgeführt werden. Auf diese Weise kann verhindert werden, dass die Permanentmagneten 9 überhitzen und somit entmagnetisiert werden.

Bei dem Ausführungsbeispiel von FIG 4 weist das Wicklungssystem im Außenstator 2 die Polpaarzahl pw = 5 auf. Aus der Anzahl der Permanentmagnete 12 im Innenstator 10 ergibt sich die Polpaarzahl pm = 12 für den Innenstator 10. Unter Berücksichtigung der oben genannten Formel ist nach außen hin die Polpaarzahl pr = 17 des Rotors 7 wirksam.

FIG 5 zeigt die elektrische Maschine 1 gemäß FIG 4 im Querschnitt. Hierbei ist zu erkennen, dass die Welle 13 der elektrischen Maschine 1 in dem vorliegenden Ausführungsbeispiel als Hohlwelle ausgebildet ist. Darüber hinaus weist die elektrische Maschine 1 hierbei ein erstes Lagerelement 24 und ein zweites Lagerelement 25 auf. Das erste Lagerelement 24 ist zwischen dem ersten Flansch 15 und dem Rotor 7 angeordnet. Das zweite Lagerelement 25 ist zwischen dem zweiten Flansch 16 und dem Rotor 7 angeordnet. Die Lagerelemente 24, 25 können insbesondere als Kugellager ausgebildet sein.

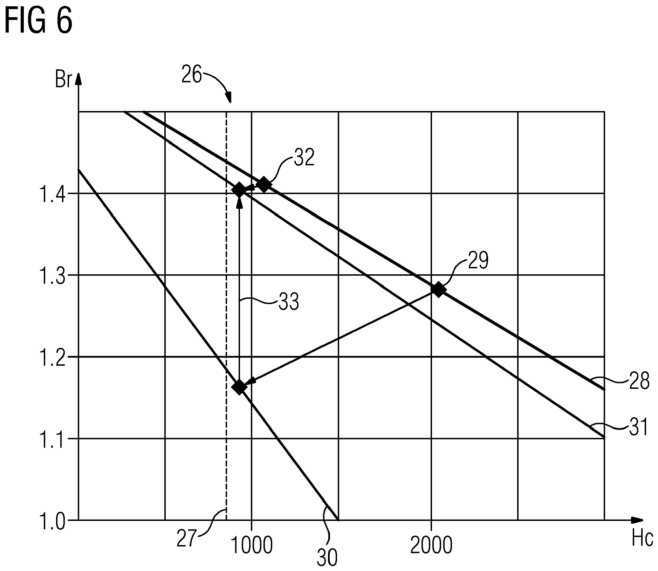

FIG 6 zeigt einen Graphen 26, bei dem auf der Abszisse die Koerzitivfeldstärke Hc und auf der Ordinate die Remanenz Br dargestellt sind. Auf der Abszisse sind vorliegend beispielhaft Werte für die Koerzitivfeldstärke Hc in kA/m dargestellt. Des Weiteren sind auf der Ordinate beispielhafte für die Remanenz Br dargestellt. Des Weiteren kennzeichnet die gestrichelte Linie 27 den Minimalwert für die Koerzitivfeldstärke Hc. Durch den Graph 26 soll der Zusammenhang aus Remanenz Br, Koerzitivfeldstärke Hc und Temperatur dargestellt werden. Vorliegend stellt die Gerade 28 den Zusammenhang zwischen Koerzitivfeldstärke Hc und Remanenz Br für einen Permanentmagneten 12 dar, der aus Eisen-Neodym-Bor gebildet ist.

Derartige Magnetqualitäten mit hoher Remanenz haben einen höheren Anteil an schweren Seltenen Erden. Dabei stellt der Punkt 29 ein erstes Material mit einer hohen Koerzitivfeldstärke Hc und einer geringen Remanenz Br dar. Wenn die Temperatur innerhalb der elektrischen Maschine 1 beispielsweise auf einen Wert von 130° C erhöht wird, verändert sich die Koerzitivfeldstärke Hc und die Remanenz Br des ersten Materials in Folge der Temperaturkoeffizienten des ersten Materials. Für den Zusammenhang zwischen Koerzitivfeldstärke Hc und Remanenz Br gilt der Zusammenhang, der durch die Gerade 30 beschrieben ist.

Wenn nun die Permanentmagnete 12 mittels der ersten Kühleinrichtung 20 mit einer Kühlflüssigkeit, insbesondere Wasser, gekühlt werden und daher beispielsweise nur auf eine Temperatur von maximal 40° C erwärmt werden, können Materialien mit einer geringeren Koerzitivfeldstärke Hc eingesetzt werden.

Dies ist vorliegend durch die Gerade 31 verdeutlicht. Wenn in diesem Fall ein zweites Material, welches vorliegend durch den Punkt 32 verdeutlicht ist, verwendet wird, das eine hohe Remanenz Br und eine geringe Koerzitivfeldstärke Hc aufweist, hat dies einerseits den Vorteil, dass die Remanenz Br deutlich, beispielsweise um einen Wert von 20 %, erhöht wird. Dies ist vorliegend durch den Pfeil 33 verdeutlicht. Ein weiterer Vorteil ergibt sich dadurch, dass weniger teure Seltene Erden für die Permanentmagneten 12 verwendet werden müssen. Die Auswahl des ersten und des zweiten Materials ergibt sich aus der Forderung, dass der Mindestwert für die Koerzitivfeldstärke Hc, der durch die Linie 27 gekennzeichnet ist, nicht unterschritten werden darf, weil es sonst im Betrieb der elektrischen Maschine 1 zur Abmagnetisierung kommen würde.

**Patentansprüche**

1. Rotor (7) einer elektrischen Maschine (1), welcher eine glockenförmige Form aufweist, wobei der Rotor (7) einen zylinderförmigen Abschnitt (42) aufweist, wobei der Rotor (7) einen konusförmigen Abschnitt (43) aufweist, wobei der zylinderförmige Abschnitt (42) magnetisch aktive Bereiche (45) und amagnetische Bereiche (46) aufweist, **dadurch gekennzeichnet, dass** der konusförmige Abschnitt (43) eine Stegstruktur (44) aufweist, wobei zwischen den Stegen die Konusform durchbrochen ist, mit einem additiv erzeugten dreidimensionalen Element (42,43), wobei dieses zumindest ein Teil des konusförmigen Abschnitts des Rotors (7) ist.

2. Rotor (7) nach Anspruch 1, wobei dieser radial Löcher (40) aufweist.

3. Rotor (7) nach Anspruch 1 oder 2, wobei ein amagnetischer Bereich (46) eine Luftschaufel (47) ausbildet.

4. Rotor (7) nach einem der Ansprüche 1 bis 3, wobei der magnetisch aktive Bereich (45) eine Blechung (48) aufweist.

5. Elektrische Maschine (1) mit

   - einem Außenstator (2),
   - einem Innenstator (10), der konzentrisch zu dem Außenstator (2) innerhalb des Außenstators (2) angeordnet ist, und
   - einem Rotor (7), der konzentrisch zu dem Außenstator (2) und dem Innenstator (10) zwischen dem Außenstator (2) und dem Innenstator (10) angeordnet ist und der relativ zum Außenstator (2) und zum Innenstator (10) bewegbar ist, wobei
   - der Außenstator (2) eine Mehrzahl von Wicklungen (3) aufweist,
   - der Innenstator (10) eine Mehrzahl von Permanentmagneten (12) aufweist, und
   - der Rotor (7) ein Trägerelement (8) umfasst, das aus einem amagnetischen Material gebildet ist und das eine Mehrzahl von Aussparungen aufweist, in denen jeweils ein weichmagnetisches Segment (9) angeordnet ist, wobei der Rotor (7) nach einem der Ansprüche 1 bis 4 ausgebildet ist.

6. Elektrische Maschine (1) nach Anspruch 5, wobei die elektrische Maschine (1) eine erste Kühleinrichtung (20) zum Kühlen des Innenstators (10) aufweist.

7. Elektrische Maschine (1) nach Anspruch 5 oder 6, wobei die elektrische Maschine (1) eine zweite Kühleinrichtung (22) zum Kühlen des Außenstators (2) aufweist.

8. Elektrische Maschine (1) nach einem der Ansprüche 5 bis 7, wobei die erste Kühleinrichtung (20) und/oder die zweite Kühleinrichtung (22) eine Mehrzahl von Kühlrohren (21, 23) aufweist, die von einer Kühlflüssigkeit durchströmt sind.

9. Elektrische Maschine (1) nach Anspruch 8, wobei die die Kühlrohre (21, 23) in einem Eisenpaket (4, 11) des Innenstators (10) und/ oder des Außenstators (2) angeordnet sind.

**10.** Elektrische Maschine (1) nach Anspruch 8 oder 9, wobei die Kühlrohre (21, 23) entlang der axialen Richtung der elektrischen Maschine (1) in Umfangsrichtung gleichmäßig verteilt angeordnet sind.

**11.** Elektrische Maschine (1) nach einem der Ansprüche 5 bis 10, wobei die Permanentmagnete (12) des Innenstators (10) aus einem Ferrit gebildet sind.

**12.** Elektrische Maschine (1) nach einem der Ansprüche 5 bis 11, wobei die Permanentmagnete (12) des Innenstators (10) Eisen-Neodym-Bor enthalten.

**13.** Elektrische Maschine (1) nach einem der Ansprüche 5 bis 13, wobei der Rotor (7) mit einer Welle (13) verbunden ist, die als Hohlwelle ausgebildet ist.

**14.** Verfahren zur Herstellung eines Rotors (7) einer elektrischen Maschine (1), welcher eine glockenförmige Form aufweist, **dadurch gekennzeichnet, dass** zur Herstellung des Rotors (7) zumindest teil- weise ein additives Herstellungsverfahren verwen- det wird, wobei eine Blechung (48) durch eine alternierende Verfestigung unterschiedlicher Materialien erzeugt wird.

**15.** Verfahren nach Anspruch 15, wobei ein Rotor (7) nach einem der Ansprüche 1 bis 4 hergestellt wird.

**Claims**

**1.** Rotor (7) of an electric machine (1), which has a bell shape, wherein the rotor (7) has a cylindrical section (42), wherein the rotor (7) has a conical section (43), wherein the cylindrical section (42) has magnetically active areas (45) and non-magnetic areas (46), **characterised in that** the conical section (43) has a web structure (44), wherein the cone shape is interrupted between the webs, having an additively manufactured three-dimensional element (42, 43), wherein this is at least one part of the conical section of the rotor (7).

**2.** Rotor (7) according to claim 1, wherein the rotor has radial holes (40).

**3.** Rotor (7) according to claim 1 or 2, wherein a non- magnetic area (46) forms an air vane (47).

**4.** Rotor (7) according to one of claims 1 to 3, wherein the magnetically active area (45) has a lamination (48).

**5.** Electric machine (1) having

- an external stator (2),
- an internal stator (10), which is arranged concentric to the external stator (2) within the external stator (2), and
- a rotor (7), which is arranged concentric to the external stator (2) and the internal stator (10) between the external stator (2) and the internal stator (10) and which can be moved relative to the external stator (2) and the internal stator (10), wherein
- the external stator (2) has a plurality of windings (3),
- the internal stator (10) has a plurality of permanent magnets (12), and
- the rotor (7) comprises a carrier element (8), which is formed from a non-magnetic material and which has a plurality of cutouts into which a soft-magnetic segment (9) is arranged in each case, wherein the rotor (7) is embodied according to one of claims 1 to 4.

**6.** Electric machine (1) according to claim 5, wherein the electric machine (1) has a first cooling device (20) for cooling the internal stator (10).

**7.** Electric machine (1) according to claim 5 or 6, wherein the electric machine (1) has a second cooling device (22) for cooling the external stator (2).

**8.** Electric machine (1) according to one of claims 5 to 7, wherein the first cooling device (20) and/or the second cooling device (22) has a plurality of cooling tubes (21, 23), through which cooling fluid passes.

**9.** Electric machine (1) according to claim 8, wherein the cooling tubes (21, 23) are arranged in an iron core (4, 11) of the internal stator (10) and/or the external stator (2).

**10.** Electric machine (1) according to claim 8 or 9, wherein the cooling tubes (21, 23) are arranged distributed uniformly in the peripheral direction along the axial direction of the electric machine (1).

**11.** Electric machine (1) according to one of claims 5 to 10, wherein the permanent magnets (12) of the internal stator (10) are formed from a ferrite.

**12.** Electric machine (1) according to one of claims 5 to 11, wherein the permanent magnets (12) of the internal stator (10) contain neodymium iron boron.

**13.** Electric machine (1) according to one of claims 5 to 12, wherein the rotor (7) is connected to a shaft (13), which is embodied as a hollow shaft.

**14.** Method for producing a rotor (7) of an electric machine (1), which has a bell shape, **characterised in**

**that** an additive manufacturing method is used at least partially to manufacture the rotor (7), wherein a lamination (48) is generated by alternately solidifying different materials.

15. Method according to claim 14, wherein a rotor (7) according to one of claims 1 to 4 is manufactured.

**Revendications**

1. Rotor (7) d'une machine (1) électrique, lequel a une forme en cloche, le rotor (7) ayant un tronçon (42) en forme de cylindre, le rotor (7) ayant un tronçon (43) en forme de cône, le tronçon (42) en forme de cylindre ayant des régions (45) actives magnétiquement et des régions (46) amagnétiques, **caractérisé en ce que** le tronçon (43) en forme de cône a une structure (44) à parties pleines, la forme en cône étant interrompue entre les parties pleines, comprenant un élément (42, 43) tridimensionnel produit additivement, celui-ci étant au moins une partie du tronçon en forme de cône du rotor (7).

2. Rotor (7) suivant la revendication 1, dans lequel celui-ci a des trous (40) radiaux.

3. Rotor (7) suivant la revendication 1 ou 2, dans lequel une région (46) amagnétique constitue une aube (47) à air.

4. Rotor (7) suivant la revendication 1 à 3, dans lequel la région (45) active magnétiquement a un assemblage (48) de tôle.

5. Machine (1) électrique comprenant

   - un stator (2) extérieur,
   - un stator (1) intérieur, qui est disposé concentriquement au stator (2) extérieur à l'intérieur du stator (2) extérieur et
   - un rotor (7), qui est disposé concentriquement au stator (2) extérieur et au stator (1) intérieur entre le stator (2) extérieur et le stator (10) intérieur et qui est mobile par rapport au stator (2) extérieur et au stator (1) intérieur, dans laquelle,
   - le stator (2) extérieur a une pluralité d'enroulements (3),
   - le stator (10) intérieur a une pluralité d'aimants (12) permanents et
   - le rotor (7) comprend un élément (8) de support en un matériau amagnétique et ayant une pluralité d'évidements dans lesquels est disposé respectivement un segment (9) à magnétisme doux, le rotor (7) étant constitué suivant l'une des revendications 1 à 4.

6. Machine (1) électrique suivant la revendication 5, dans laquelle la machine (1) électrique a un premier dispositif (20) de refroidissement pour refroidir le stator (10) intérieur.

7. Machine (1) électrique suivant la revendication 5 ou 6, dans laquelle la machine (1) électrique a un deuxième dispositif (22) de refroidissement pour refroidir le stator (2) extérieur.

8. Machine (1) électrique suivant l'une des revendications 5 à 7, dans laquelle le premier dispositif (20) de refroidissement et/ou le deuxième dispositif (22) de refroidissement ont une pluralité de tubes (21, 23) de refroidissement, dans lesquels passe un liquide de refroidissement.

9. Machine (1) électrique suivant la revendication 8, dans laquelle les tubes (21, 23) de refroidissement sont disposés dans un paquet (4, 11) de fer du stator (10) intérieur et/ou du stator (2) extérieur.

10. Machine (1) électrique suivant la revendication 8 ou 9, dans laquelle les tubes (21, 23) de refroidissement sont disposés suivant la direction axiale de la machine (1) électrique, en étant répartis uniformément dans la direction périphérique.

11. Machine (1) électrique suivant l'une des revendications 5 à 10, dans laquelle les aimants (12) permanents du stator (10) intérieur sont en ferrite.

12. Machine (1) électrique suivant l'une des revendications 5 à 11, dans laquelle les aimants (12) permanents du stator (10) intérieur contiennent du fer-néodyme-bore.

13. Machine (1) électrique suivant l'une des revendications 5 à 12, dans laquelle le rotor est relié à un arbre (13), qui est constitué sous la forme d'un arbre creux.

14. Procédé de fabrication d'un rotor (7) d'une machine (1) électrique, lequel a une forme en cloche, **caractérisé en ce que**, pour fabriquer le rotor, on utilise, au moins en partie, un procédé de fabrication additif, dans lequel on produit un assemblage (48) de tôle par une consolidation alternée de matériaux différents.

15. Procédé suivant la revendication 14, dans lequel on fabrique un rotor (7) suivant l'une des revendications 1 à 4.

FIG 1

FIG 2

FIG 3

FIG 4

FIG 5

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2770616 A1
- DE 1270673
- GB 521617 A
- US 20130278094 A1